# EUROPEAN PATENT APPLICATION

(11) **EP 4 797 425 A1**
(43) Date of publication of application: **26.08.2026**
(21) Application number: 24879481.0
(22) Date of filing: 17.09.2024
(51) Int. Cl.: H01M 50/536, H01G 11/72, H01G 11/84, H01M 4/66, H01M 10/04, H01M 50/538

(54) **METHOD FOR MANUFACTURING POWER STORAGE DEVICE**

(30) Priority: 16.10.2023 JP 2023178174
(71) Applicant: Panasonic Intellectual Property Management Co., Ltd., Kadoma-shi, Osaka 571-0057 (JP)
(72) Inventor: HIROSE, Takayuki, Kadoma-shi, Osaka 571-0057 (JP)
(74) Representative: Novagraaf International SA
(86) International application number: PCT/JP2024/033135
(87) International publication number: WO 2025/084054

(57) **Abstract**

This method for manufacturing a power storage device includes: preparing an electrode group having current collectors 12 partially laminated with electrode active material layers; bringing exposed parts 12a of the current collectors 12 into contact with a first surface 21a of a current collector plate; and irradiating a second surface 21b of the current collector plate on a side opposite to the first surface 21a with laser light L to join the exposed parts 12a to the first surface 21a. The collectors 12 contain copper, the collector plate contains iron, and irradiation with the laser beam L is performed so that the temperature of at least a part of the first surface 21a is equal to or higher than the melting point of copper and lower than the melting point of iron.

## Description

### TECHNICAL FIELD

The present disclosure relates to a method of manufacturing a power storage apparatus.

### BACKGROUND ART

In the related art, a power storage apparatus in which an electrode group is housed in an outer can is known. In a power storage apparatus like this, a current collector plate is welded to a current collector exposed at the end of the electrode group (see, for example, Patent literature 1).

### RELATED-ART LITERATURE

### PATENT LITERATURE

[Patent Literature 1] JP2008-166030

### SUMMARY OF INVENTION

### TECHNICAL PROBLEM

Where the current collector contains copper and the current collector plate contains iron, solidification cracking tends to occur easily in a welded portion as a result of mixture of copper and iron during welding. Solidification cracking could cause an increase in resistance, etc. and lower the quality of the power storage apparatus.

The present disclosure addresses the issue, and a purpose thereof is to provide a technology to improve the quality of a power storage apparatus.

### SOLUTION TO PROBLEM

An embodiment of the present disclosure relates to a method of manufacturing a power storage apparatus. The method includes: preparing an electrode group including a current collector in which an electrode active material layer is stacked on a part of the current collector; and bringing an exposed portion of the current collector that is not coated with the electrode active material layer into contact with a first surface of the current collector plate and irradiating a second surface of the current collector plate opposite to the first surface with a laser beam to join the exposed portion to the first surface. The current collector contains copper, the current collector plate contains iron, and the laser beam is radiated so that a temperature of at least a part of the first surface is equal to or above a melting point of copper and below a melting point of iron.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, the quality of a power storage apparatus can be improved.

### BRIEF DESCRIPTION OF DRAWINGS

[Fig. 1] Fig. 1 is a cross-sectional view of a power storage apparatus according to the embodiment.
[Fig. 2] Fig. 2A is an exploded perspective view of an electrode group. Fig. 2B is a plan view of the electrode group to which a first current collector plate is joined.
[Fig. 3] Fig. 3A shows a step of joining the current collector of the first electrode plate and the first current collector plate. Fig. 3B shows a step of joining the current collector of the second electrode plate and the second current collector plate.

### DESCRIPTION OF EMBODIMENTS

Hereinafter, the present disclosure will be described based on a preferred embodiment with reference to the accompanying drawings. The embodiment is not intended to limit the scope of the present disclosure but exemplify the present disclosure. Not all of the features and the combinations thereof described in the embodiment are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

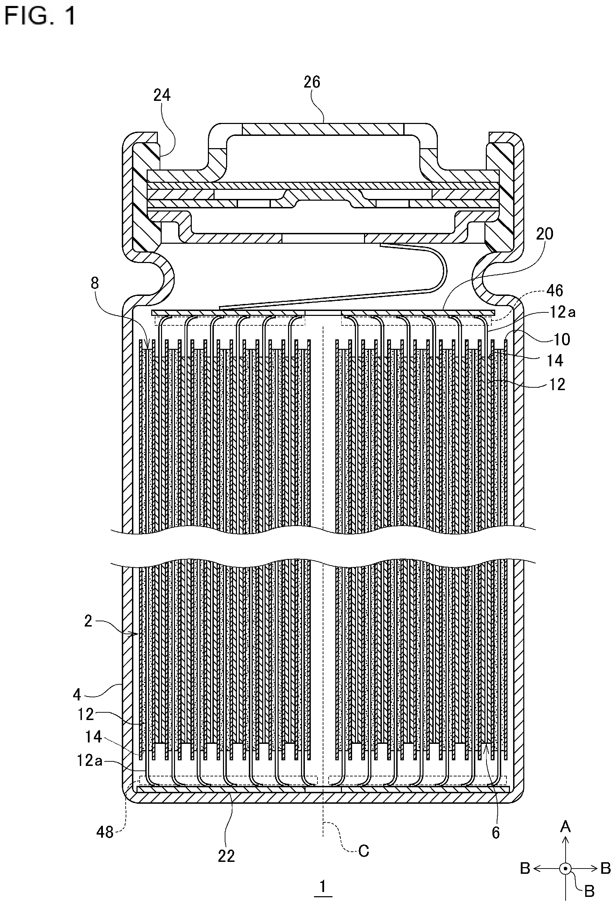

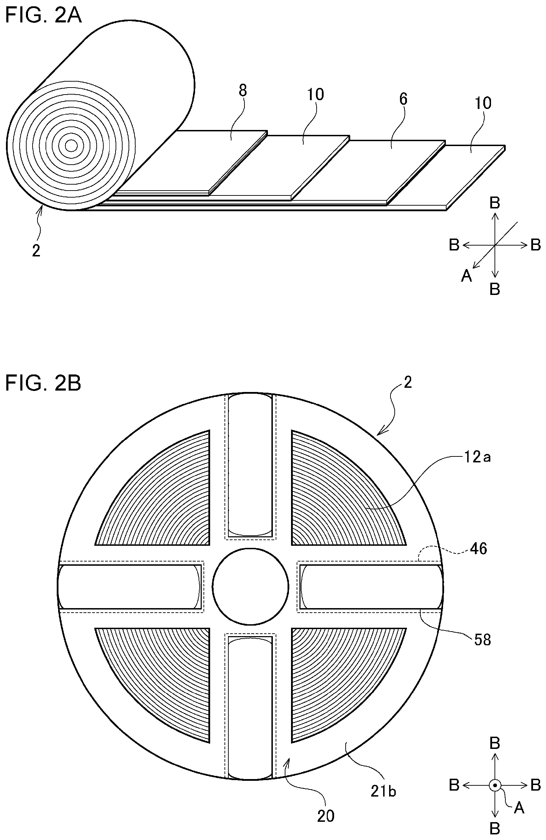

Fig. 1 is a cross-sectional view of a power storage apparatus 1 according to the embodiment. Fig. 2A is an exploded perspective view of an electrode group 2. Fig. 2B is a plan view of the electrode group 2 to which a first current collector plate 20 is joined. In Fig. 2A, the illustration of a current collector 12 and an electrode active material layer 14 in distinction from one another is omitted.

The power storage apparatus 1 is a rechargeable secondary battery exemplified by a lithium ion battery, a nickel hydride battery, a nickel-cadmium battery, etc. or a capacitor like an electric double layer capacitor. The power storage apparatus 1 has a structure in which the electrode group 2 is housed in an outer can 4 along with an electrolytic solution (not shown), the first current collector plate 20, and a second current collector plate 22. The electrode group 2 is cylindrical in shape by way of one example and has a winding structure in which a belt-like first electrode plate 6 and a belt-like second electrode plate 8 are stacked, sandwiching a belt-like separator 10, and are wound in a spiral shape. In the embodiment, the first electrode plate 6 is the positive electrode plate and the second electrode plate 8 is the negative electrode plate. The first electrode plate 6 may be the negative electrode plate, and the second electrode plate 8 may be the positive electrode plate. The separator 10 is formed by a microporous film made of, by way of one example, a polypropylene resin or the like.

The first electrode plate 6 and the second electrode plate 8 include the current collector 12 and an electrode active material layer 14 stacked on a part of the current collector 12. In the case of a general lithium ion secondary battery, the current collector 12 is comprised of an aluminum foil or the like in the case of a positive electrode and is comprised of a copper foil or the like in the case of a negative electrode. The electrode active material layer 14 can be formed by applying an electrode mixture material to the surface of the current collector 12 by a known coating apparatus and drying and rolling the material. The electrode mixture material is obtained by kneading materials including an electrode active material, a binder, a conductive material, etc. in a dispersion medium and uniformly dispersing the materials. In the case of a general lithium ion secondary battery, the electrode active material is lithium cobalt oxide, lithium iron phosphate, etc. in the case of a positive electrode and is graphite, etc. in the case of a negative electrode.

The first electrode plate 6 and the second electrode plate 8 have an exposed portion 12a of the current collector 12 at the end of the plate in the width direction A. The width direction A is a direction intersecting the longitudinal direction of the belt. The exposed portion 12a included in the first electrode plate 6 and the exposed portion 12a included in the second electrode plate 8 protrude in mutually opposite directions in the width direction A. The exposed portion 12a is a portion of the current collector 12 that is not coated with the electrode active material layer 14.

As described above, the electrode group 2 has a structure in which the first electrode plate 6 and the second electrode plate 8 are wound. For this reason, the end of the current collector 12 in the width direction A, i.e., a plurality of exposed portions 12a are arranged in the radial direction B of the electrode group 2. In other words, the electrode group 2 has a structure in which the exposed portions 12a are stacked. The electrode group 2 may have a structure in which pieces of the first electrode plate 6 and pieces of the second electrode plate 8 are stacked in a plurality of layers, sandwiching the separator 10.

The electrode group 2 by way of one example has a first joined region 46 and a second joined region 48 in which the plurality of exposed portions 12a arranged in the radial direction B are bent in the radial direction B. The first joined region 46 and the second joined region 48 are at opposite positions in the width direction A. The plurality of exposed portions 12a included in the first joined region 46 are the exposed portions 12a of the current collector 12 provided in the first electrode plate 6. The plurality of exposed portions 12a included in the second joined region 48 are the exposed portions 12a of the current collector 12 provided in the second electrode plate 8.

For example, each exposed portion 12a is bent toward the center of winding C of the electrode group 2, i.e., bent inward in the radial direction B. The center of winding C is, for example, the geometric center of the outline of the electrode group 2 seen in the width direction A. In the electrode group 2 by way of one example, a plurality of first joined regions 46 and a plurality of second joined regions 48 are respectively arranged at predetermined intervals in the circumferential direction of the electrode group 2. In the embodiment, four first joined regions 46 are arranged at intervals of 90° in the circumferential direction. Further, four second joined regions 48 are arranged at intervals of 90° in the circumferential direction.

The first current collector plate 20 and the second current collector plate 22 are arranged so as to sandwich the electrode group 2 in the width direction A. The first current collector plate 20 is disposed on the side of first joined region 46. The second current collector plate 22 is disposed on the side of the second joined region 48. The thickness of the first current collector plate 20 and the second current collector plate 22 is, for example, 0.1 mm or more and 0.8 mm or less. The thickness is defined as the average value of the thickness at any 10 points, i.e., the average thickness.

The first current collector plate 20 is made of, for example, aluminum or the like. The plurality of exposed portions 12a bent in the first joined region 46 are placed in surface contact with the first current collector plate 20. By bending each exposed portion 12a, the contact area between each exposed portion 12a and the first current collector plate 20 increases. Laser welding or the like is performed at a position where the first joined region 46 and the first current collector plate 20 overlap. Thereby, the exposed portion 12a of each winding layer and the first current collector plate 20 are joined to each other.

The second current collector plate 22 is made of, for example, iron. The plurality of exposed portions 12a bent in the second joined region 48 are placed in surface contact with the second current collector plate 22. By bending each exposed portion 12a, the contact area between each exposed portion 12a and the second current collector plate 22 increases. Laser welding or the like is performed at a position where the second joined region 48 and the second current collector plate 22 overlap. Thereby, the exposed portion 12a of each winding layer and the second current collector plate 22 are joined to each other.

The electrode group 2 to which the first current collector plate 20 and the second current collector plate 22 are joined is housed in the bottomed cylindrical outer can 4 along with the electrolytic solution. The outer can 4 is made of, for example, copper, nickel, iron, aluminum, an alloy thereof, or the like. The second current collector plate 22 is joined to the inner bottom surface of the outer can 4 by welding or the like. The first current collector plate 20 is joined to a sealing plate 26 made of the same metal as the outer can 4 by welding or the like. The sealing plate 26 is fitted into the opening of the outer can 4 via an insulating gasket 24. Thereby, the electrode group 2 and the electrolytic solution are sealed in the outer can 4.

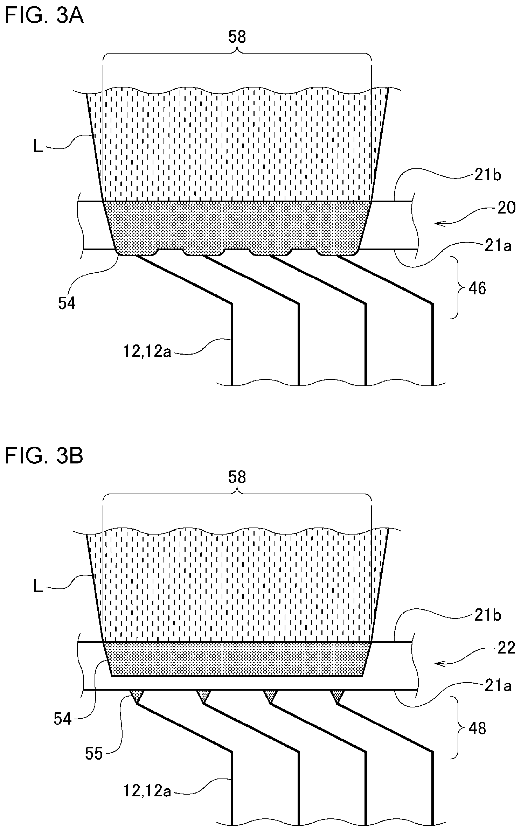

A description will now be given of a method of manufacturing the power storage apparatus 1. Fig. 3A shows a step of joining the current collector 12 of the first electrode plate 12 and the first current collector plate 20. Fig. 3B shows a step of joining the current collector 12 of the second electrode plate 8 and the second current collector plate 22. Fig. 3A and Fig. 3B shows only some of the exposed portions 12a. Further, only a part of the current collector plate is shown. First, as shown in Fig. 2A, the first electrode plate 6, the second electrode plate 8, and the separators 10, which are belt-like, are prepared. Then, the separator 10, the first electrode plate 6, the separator 10, and the second electrode plate 8 are stacked in this order. The stacked product thus obtained is wound in a spiral shape to form the winding electrode group 2.

Then, the electrode group 2 is set in a processing machine (not shown). Further, the end of the current collector 12 provided in the first electrode plate 6 is bent by the processing machine in the radial direction B. This forms the first joined region 46 including the plurality of exposed portions 12a bent in the radial direction B. After that, the first current collector plate 20 is pressed against the first joined region 46. The plurality of exposed portions 12a arranged in the first joined region 46 and the first current collector plate 20 are joined to each other by laser welding.

Specifically, as shown in Fig. 3A, the plurality of exposed portions 12a arranged are brought into contact with the first surface 21a of the first current collector plate 20, and the second surface 21b of the first current collector plate 20 opposite the first surface 21a is irradiated with laser beam L in that state. The laser beam L irradiates an irradiated region 58 on the second surface 21b. The irradiated region 58 overlaps the first joined region 46 in the width direction A. Thus, the irradiated region 58 extends in the direction of the arrangement of the exposed portions 12a and overlaps the plurality of exposed portions 12a arranged. In the embodiment, four irradiated regions 58 extend radially from the center of winding C (see Fig. 2B).

The laser beam L or the spot of the laser beam L of the embodiment is elongated in the direction of arrangement of the exposed portions 12a. The shape of the laser beam L by way of one example is a linear shape that extends substantially over the entirety of one irradiated region 58. The laser beam L may be point-shaped. In this case, the laser beam L irradiates one end of the irradiated region 58 and is directed toward the other end of the irradiated region 58 for a scan. The direction of travel of the laser beam L may be from the center of the electrode group 2 toward outside or from outside toward the center of the electrode group 2.

As described above, the current collector 12 and the first current collector plate 20 by way of one example are made of aluminum. In this case, the laser beam L irradiates the second surface 21b so that the temperature of at least a part of the first surface 21a is higher than the melting point of aluminum. Preferably, the laser beam L is radiated so that the overall temperature of the region on the first surface 21a overlapping each irradiated region 58 is higher than the melting point of aluminum. The temperature of the first surface 21a can be increased to a desired temperature by adjusting the output, irradiation time, and focal length of the laser beam L or by adjusting the scanning speed in the case of scanning the irradiated region 58 with the laser beam L.

Irradiation with the laser beam L forms a melted portion 54 having a depth reaching the first surface 21a in the first current collector plate 20. In addition, the tip of the current collector 12 is also melted to form a part of the melted portion 54. The melted portion 54 is also called a melting pond. The melted portion 54 is substantially comprised only of the molten product of the first current collector plate 20 at the position where the current collector 12 is not present. The melted portion 54 is comprised of the molten product of the first current collector plate 20 and the molten product of the current collector 12 at the position where the current collector 12 is present. After irradiation with the laser beam L, the melted portion 54 cools and solidifies, forming a joined portion that joins each exposed portion 12a and the first surface 21a of the first current collector plate 20 to each other.

When all irradiated regions 58 in the first current collector plate 20 are irradiated with the laser beam L, the first current collector plate 20 is completely joined to the electrode group 2. Subsequently, the end of the current collector 12 provided in the second electrode plate 8 is bent by a processing machine. This forms a second joined region 48 including the plurality of exposed portions 12a bent in the radial direction B. After that, the second current collector plate 22 is pressed against the second joined region 48. The plurality of exposed portions 12a arranged in the second joined region 48 and the second current collector plate 22 are joined to each other by laser welding.

Specifically, as shown in Fig. 3B, the plurality of exposed portions 12a arranged are brought into contact with the first surface 21a of the second current collector plate 22, and the second surface 21b of the second current collector plate 22 opposite the first surface 21a is irradiated with the laser beam L in that state. The laser beam L irradiates the irradiated region 58 on the second surface 21b. The arrangement and shape of the irradiated region 58 in the second current collector plate 22 are similar to those of the irradiated region 58 in the first current collector plate 20. The shape of the laser beam L is a linear shape as in the case of the joint between the current collector 12 of the first electrode plate 6 and the first current collector plate 20.

As described above, the current collector 12 by way of one example is made of copper, and the second current collector plate 22 is made of iron. In this case, the laser beam L irradiates the second surface 21b so that the temperature of at least a part of the first surface 21a is equal to or above the melting point of copper and below the melting point of iron. The melting point of copper is about 1085°C, and the melting point of iron is about 1538°C. Preferably, the laser beam L is radiated so that the overall temperature of the region on the first surface 21a overlapping each irradiated region 58 is equal to or above the melting point of copper and below the melting point of iron.

Irradiation with the laser beam L forms a melted portion 54 having a depth short of the first surface 21a, i.e., a depth not reaching the first surface 21a, in the second current collector plate 22. Further, only the current collector 12 is melted on the side of the first surface 21a, and a melted portion 55 substantially comprised only of the molten product of the current collector 12 is formed on the first surface 21a. After irradiation with the laser beam L, the melted portion 55 cools and solidifies, forming a joined portion that joins each exposed portion 12a and the first surface 21a of the second current collector plate 22 to each other. Further, a heat-affected zone (HAZ) is formed in the second current collector plate 22.

The electrode group 2 to which the first current collector plate 20 and the second current collector plate 22 are joined is housed in the outer can 4 along with the electrolytic solution. Further, processes like the joint of the second current collector plate 22 to the outer can 4, joint of the first current collector plate 20 to the sealing plate 26, fitting of the sealing plate 26 in the opening of the outer can 4, etc. are performed. Thereby, the power storage apparatus 1 is obtained. The sequence of steps such as the joint of respective parts, housing in the outer can 4, and fitting of the sealing plate 26 can be modified as appropriate. In the case a liquid pouring port is provided in the sealing plate 26, etc., for example, the electrolytic solution may be poured into the outer can 4 after the sealing plate 26 is fitted in the opening of the outer can 4. Alternatively, the first joined region 46 and the second joined region 48 may be formed first, the first current collector plate 20 and the second current collector plate 22 may then be pressed against the electrode group 2, and then the first current collector plate 20 and the second current collector plate 22 may be irradiated with the laser beam L.

Where the current collector 12 contains copper and the second current collector plate 22 contains iron, copper and iron are mixed in the melted portion 54 if both the current collector 12 and the second current collector plate 22 are melted by irradiation with the laser beam L. In this case, solidification cracking occurs easily in the joint between the current collector 12 and the second current collector plate 22. According to the embodiment, on the other hand, the laser beam L is radiated so that the temperature of at least a part of the first surface 21a is equal to or above the melting point of copper and below the melting point of iron. This makes it possible to join the current collector 12 and the second current collector plate 22 by melting substantially only the current collector 12 at least in a part. This can suppress the occurrence of solidification cracking and improve the quality of the power storage apparatus 1.

That fact that substantially only the current collector 12 is melted and joined to the second current collector plate 22 can be confirmed by observing the cross-section of the joined portion in which the current collector 12 and the second current collector plate 22 are joined by a publicly known microscope or observing the joined portion by X-ray CT. "Containing copper" in the present disclosure means that the proportion of copper in the entirety of metal that makes up the current collector 12 is 99.7% or more, preferably 99.9% or more, or more preferably substantially 100%. Further, "containing iron" means that the proportion of iron in the entirety of metal that makes up the second current collector plate 22 is 90% or more, preferably 99% or more, or more preferably substantially 100%. Further, the above-described adjustment of the laser beam L is not limited to the joint between the current collector of the negative electrode and the current collector plate but is applicable to the welding of a copper-containing member and an iron-containing member.

Further, the laser beam L in a linear shape elongated in the direction of arrangement of the exposed portions 12a irradiates the second surface 21b in the embodiment. If the laser beam L is point-shaped, it is necessary to scan the irradiated region 58 with the laser beam L. Moving the point irradiated with the laser beam L could generate convection of the molten product in the melted portion 54. This makes it difficult to maintain the temperature of the first surface 21a to be equal to or above the melting point of copper and below the melting point of iron in a stable manner. By configuring the laser beam L to have a linear shape, on the other hand, it is possible to irradiate the entire irradiated region 58 with the laser beam L without moving the laser beam L or moving it over a short distance. This makes it easy to maintain the first surface 21a at a desired temperature in a stable manner. Accordingly, the quality of the power storage apparatus 1 can be improved more easily.

The embodiment of the present disclosure has been described above in detail. The embodiment described above is merely a specific example of practicing the present disclosure. The details of the embodiments shall not be construed as limiting the technical scope of the present disclosure. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiment by using phrases such as "of the embodiment" and "in the embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

The embodiments may be defined by the following items.

### [Item 1]

A method of manufacturing a power storage apparatus (1), including:
preparing an electrode group (2) including a current collector (12) in which an electrode active material layer (14) is stacked on a part of the current collector (12); and
bringing an exposed portion (12a) of the current collector (12) that is not coated with the electrode active material layer (14) into contact with a first surface (21a) of the current collector plate (22) and irradiating a second surface (21b) of the current collector plate (22) opposite to the first surface (21a) with a laser beam (L) to join the exposed portion (12a) to the first surface (21a),
wherein the current collector (12) contains copper,
wherein the current collector plate (22) contains iron, and
wherein the laser beam (L) is radiated so that a temperature of at least a part of the first surface (21a) is equal to or above a melting point of copper and below a melting point of iron.

### [Item 2]

The method of manufacturing a power storage apparatus (1) according to Item 1,
wherein the electrode group (2) has a structure in which a plurality of exposed portions (12a) are arranged, and
wherein the laser beam (L) has a shape elongated in a direction of arrangement of the exposed portions (12a).

### INDUSTRIAL APPLICABILITY

The present disclosure is applicable to a method of manufacturing a power storage apparatus.

### REFERENCE SIGNS LIST

1 power storage apparatus, 2 electrode group, 12 current collector, 12a exposed portion, 14 electrode active material layer, 20 first current collector plate, 21a first surface, 21b second surface, 22 second current collector plate, L laser beam

## Claims

1. A method of manufacturing a power storage apparatus, comprising:
preparing an electrode group including a current collector in which an electrode active material layer is stacked on a part of the current collector; and
bringing an exposed portion of the current collector that is not coated with the electrode active material layer into contact with a first surface of the current collector plate and irradiating a second surface of the current collector plate opposite to the first surface with a laser beam to join the exposed portion to the first surface,
wherein the current collector contains copper,
wherein the current collector plate contains iron, and
wherein the laser beam is radiated so that a temperature of at least a part of the first surface is equal to or above a melting point of copper and below a melting point of iron.

2. The method of manufacturing a power storage apparatus according to claim 1,
wherein the electrode group has a structure in which a plurality of exposed portions are arranged, and
wherein the laser beam has a shape elongated in a direction of arrangement of the exposed portions.
